# EUROPÄISCHE PATENTSCHRIFT

(11) **EP 0 694 954 B1**
(45) Veröffentlichungstag und Bekanntmachung des Hinweises auf die Patenterteilung: **07.05.2003**
(21) Anmeldenummer: 95108425.0
(22) Anmeldetag: 01.06.1995
(51) Int. Cl.: H01J 61/40, H01J 61/64, H01J 65/04, G01N 27/66, H01J 61/94

(54) **Ultraviolette Lampe für den Photoionisationsnachweis**
Ultraviolet lamp for detecting photoionization
Lampe ultraviolette pour la détection de la photoionisation

(30) Priorität: 01.06.1994 RU 94020044
(43) Veröffentlichungstag der Anmeldung: 31.01.1996
(73) Patentinhaber: AUERGESELLSCHAFT GMBH, 12059 Berlin (DE)
(72) Erfinder: Budovich, Vitali Lwowich, 123182 Moskau (RU); Shishazkaya, Ludmilla Petrovna, 197373 St. Petersburg (RU); Yakowlew, Sergej Aramovitsch, 190000 St. Petersburg (RU); Polotnyuk, Elena Boruchovna, 140011 Lubertsy (RU); Herrmann, Frank Peter, 12461 Berlin (DE)
(74) Vertreter: Wablat, Wolfgang, Dr. Dr.

(56) Entgegenhaltungen:
- EP-A- 0 298 544
- EP-A- 0 694 783
- DE-A- 3 736 922
- FR-A- 752 588
- FR-A- 792 615
- GB-A- 2 275 535
- US-A- 3 535 576
- US-A- 4 934 768
- DATABASE WPI Section EI, Week 9539 Derwent Publications Ltd., London, GB; Class X26, AN 95-301333 XP002041889 & RU 2 030 019 C (KHROMDETEKOLOGIYA ENTERPRISE) , 27.Februar 1995

## Beschreibung

Die vorgeschlagene Erfindung betrifft die Herstellung von Strahlungsquellen, insbesondere solche, die für die Photoionisation verwendet werden.

Derartige Quellen besitzen ein Strahlungsspektrum, welches sich im langwelligen Spektralbereich bis zu λ ≤ 155-160 nm erstreckt. Das entspricht einer Ionisation der Komponenten, die sich am leichtesten ionisieren lassen. Die kurzwellige Strahlungsgrenze entspricht der Durchlässigkeitsgrenze des Fensters der Quelle. Für die Herstellung der Fenster der Strahlungsquelle werden verschiedene Materialien verwendet, wie Metallfluoride, Saphir und Suprasil®, die eine Durchlässigkeitsgrenze von 103 nm(Lithiumfluorid) und größer besitzen. Die kurzwellige Durchlässigkeitsgrenze des Fensters und der Wellenlängenbereich des Arbeitsgases von 103 nm - 160 nm bestimmen das Gebiet der analytischen Anwendung der ultravioletten UV-Lampen eines Photoionisationsdetektors. So werden z.B. Lampen mit einem Fenster aus MgF₂, die als Arbeitsgas Krypton oder Wasserstoff enthalten, für den Nachweis praktisch aller organischen Stoffe verwendet. Für die selektive Bestimmung von Komponenten mit niedrigen Ionisationspotentialen verwendet man eine Lampe mit einem Saphir-Fenster, die Xenon als Arbeitsgas enthält.

Die Anwendung von Lampen mit hohen Energien der ausgestrahlten Photonen ist nicht immer zweckmäßig, da dabei auch das Rauschen und die Drift des Photoionisationsdetektors sehr hoch werden. Bekannt ist eine UV-Lampe, die einen Kolben, der mit Wasserstoff oder Deuterium oder ihren Gemischen mit Helium mit einem Druck bis zu 1000 Pa gefüllt ist, und ein Fenster aus MgF₂ besitzt, durch das die Strahlung austritt. In dieser Lampe regt die elektrische Entladung, gezündet im Innern der Lampe, atomaren und molekularen Wasserstoff an. Im Resultat dessen strahlt die Lampe im FUV-Bereich ein Vielfachspektrum ab. Die linke Grenze des abgestrahlten Spektrums wird durch die Durchlässigkeitsgrenze des Magnesiumfluorids bestimmt und beträgt 111,9 nm. Diese Lampe wird in Photoionisationsdetektoren angewendet und gewährleistet eine hohe Nachweisempfindlichkeit.

Ein Nachteil dieser Lampe besteht bei ihrer Anwendung zum Nachweis von Komponenten mit niedrigen Ionisationspotentialen (IP < 10 eV) in der Existenz der Lyman-α-Linie (λ=121,6 nm). Diese Lα-Linie ergibt einen intensiven Photonenfluß in die Ionisationskammer hinein, führt jedoch zu einem hohen Rauschniveau, zumal die Lα-Linie einer hohen Fluktuation unterworfen ist.

Bekannt ist eine UV-Lampe, die der erfindungsgemäßen technisch am nächsten kommt. Sie besitzt einen Entladungskolben, der als Minimum mit einem Gas gefüllt ist, das bei Anregung ein Vielfachspektrum im FUV-Bereich abstrahlt. Auf der Seite des Strahlenausganges besitzt die Lampe ein Filter, welches aus einem Material mit einer Durchlässigkeitsgrenze bei λ=122 nm hergestellt und das im Innern des Kolbens angeordnet ist. Die Anordnung des Filters führt zur Begrenzung des linken Teils des Spektrums bis unmittelbar an λ=122 nm. Damit wird auch die hochenergetische Lα-Linie ausgegrenzt. Im Resultat dessen werden das Fluktuationsrauschen und die Drift des Photoionisationsdetektors verringert.

Ferner sind technische Lösungen bekannt, die es gestatten, die Temperaturstabilität der Lampe und der Geräte zu verbessern, in denen sie verwendet wird. Damit wurde eine höhere Betriebszuverlässigkeit erreicht.

Die bekannten technischen Lösungen bedingen jedoch gleichzeitig eine Begrenzung in der Anwendung der UV-Lampen für den Photoionisationsnachweis, da die gesamte Strahlung durch ein Filter herausgeführt wird. So ist beispielsweise die Bestimmung solcher Komponenten wie Hexan, Heptan und anderer Stoffe mit Ionisationspotentialen von 10,2 eV und größer nicht möglich. Daher kann es für die Analyse komplizierter Gemische, die Stoffe mit verschiedenen Ionisationspotentialen enthalten, notwendig sein, gleichzeitig zwei Lampen zu verwenden. Dies verkompliziert die Konstruktion der Geräte, in denen die Filter verwendet werden. Außerdem gestattet das Vorhandensein eines Filters in der Lampe nicht ihre Verwendung für die Identifikation von Stoffen, was für die Arbeit der Analysatoren wünschenswert wäre.

Aufgabe der vorliegenden Erfindung ist die Erweiterung des Anwendungsgebietes der UV-Lampen für den Photoionisationsnachweis.

Die Aufgabe wird dadurch gelöst, indem in einer Lampe für den Photoionisationsnachweis, bestehend aus einem mindestens mit einem Edelgas und/oder Wasserstoff und/oder Deuterium gefüllten Entladungskolben, der ein hermetisch verbundenes Fensters als Basisfilter mit einer Kurzwelligen Grenzdurchlässigkeit von λ=103 nm und ein Zusatzfilter mit einer Durchlässigkeitscharakteristik enthält, die sich von den Fenstercharakteristik unterscheidet, und das an der inneren Fensteroberfläche angeordnet ist, wobei erfindungsgemäß das Filter die Fläche des Ausgangsfensters teilweise überdeckt.

Vorteilhafte Weiterbildungen der erfindungsgemäßen UV-Lampe sind:
- Anordnung mindestens eines weiteren Zusatzfilters auf einem Teil der inneren Oberfläche des Fensters, wobei das mindestens eine weitere Zusatzfilter eine Durchlässigkeitscharakteristik hat, die sich von der des ersten Zusatzfilters und des Fensters unterscheidet.
- Verwendung zusätzlicher Katoden zur Bildung zusätzlicher Entladungskanäle.
- Einführung zusätzlicher Anoden entsprechend der Zahl der zusätzlichen Katoden.
- Ausbildung einer gemeinsamen Anode für alle Kanäle.
- Die Zusatzfilter sind aus Calciumfluorid, Bariumfluorid, Saphir, Suprasil® und Quarz.

Das Wesen der Erfindung wird durch die folgenden Zeichnungen nähert erläutert. Es zeigen:
- Fig. 1: eine erfindungsgemäße UV-Lampe als elektrodenlose Variante;
- Fig. 2: eine erfindungsgemäße UV-Lampe, in der die Entladung mit Hilfe eines Elektrodenpaares erfolgt;
- Fig. 3: eine erfindungsgemäße UV-Lampe mit zwei Entladungskanälen und einem Zusatzfilter; und
- Fig. 4: eine erfindungsgemäße UV-Lampe mit vier Entladungskanälen und vier Zusatzfiltern.

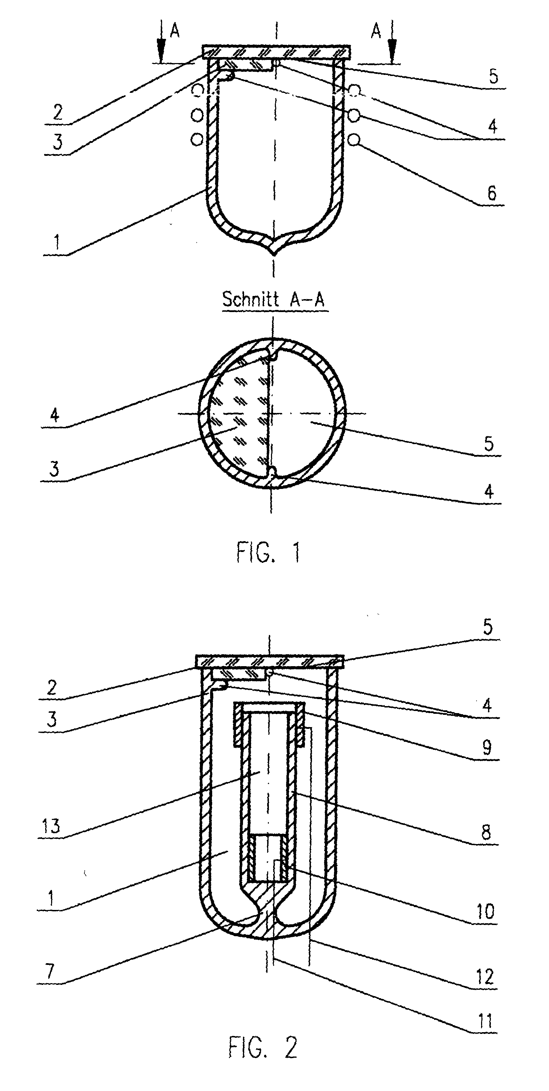

In Fig. 1 ist die elektrodenlose Ausführungsvariante der UV-Lampe dargestellt, in der ein Kolben (1) aus Glas hermetisch mit einem Fenster (2) aus Magnesiumfluorid (Basisfilter) verbunden ist. Der Kolben (1) ist gefüllt mit Xenon oder Krypton. Im Innern des Kolbens (1) ist an der inneren Oberfläche des Fensters (2) ein Zusatzfilter (3) angeordnet, bestehend aus Bariumfluorid (für Lampen mit Xenon-Füllung) oder Kalziumfluorid (für Lampen mit Kryptonfüllung). Das Zusatzfilter (3) wird an der Oberfläche des Fensters (2) mit Hilfe von Glashaltern (4) fixiert. Dabei bedeckt das Zusatzfilter (3) nur teilweise die Fläche des Fensters (2). Ein Abschnitt (5) des Fensters (2) der Lampe ist ohne zusätzlichen Filter. Die Entladung in der Lampe wird mit einem Induktor (6) erzeugt, der an einen Hochfrequenzgenerator angeschlossen ist (in Fig. 1 nicht dargestellt).

Die erfindungsgemäße UV-Lampe arbeitet folgendermaßen: Beim Durchfluß hochfrequenten Stromes am Induktor (6) entzündet sich in der UV-Lampe die Entladung und führt zur Anregung des Xenons, das im FUV-Bereich vorrangig Photonen mit einer Energie von 9,54 eV (λ=123,6 nm) und 8,44 eV (λ=147 nm) emittiert. Ein Teil der Strahlung geht durch das Zusatzfilter (3) aus Bariumfluorid, das nur Photonen mit einer Energie von 8,44 eV durchlässt. Ein anderer Teil der Strahlung geht durch den Abschnitt (5) des vom Zusatzfilter (3) nicht bedeckten Teils des Fensters und enthält beide Hauptresonanzlinien des Xenons im FUV-Bereich.

Bei einer Lampenfüllung mit Krypton wird eine Photonenstrahlung mit Energien von 10,63 eV (λ=116,5 nm) und 10,02 eV (λ=123,6 nm) erzeugt. Das Zusatzfilter (3) aus Kalziumfluorid schirmt Photonen mit einer Energie von 10,64 eV ab. Der vom Zusatzfilter (3) freie Teil des Fensters lässt die beiden Resonanzlinien des Krypton durch. Demgemäß sind faktisch in einer Lampe zwei Strahlungsquellen des FUV-Bereiches mit verschiedenen Spektralcharakteristiken enthalten, wodurch ihre Anwendung in der analytischen Messtechnik erweitert wird.

In Fig. 2 ist eine Lampenvariante dargestellt, in der im Unterschied zur oben beschriebenen Ausführungsform die Anregung und das Halten der Entladung mit Hilfe von Elektroden erfolgt. Dementsprechend besitzt die Lampe einen Glasfuß (7), auf dem sich ein Glaszylinder (8) zur Aufnahme des Elektrodensystems befindet, bestehend aus Anode (9) und Katode 10, verbunden mit den Stromzuleitern (11 und 12). Anode und Katode bilden den Entladungskanal (13). Das Zusatzfilter (3) ist durch die Glashalter 4 an der inneren Oberfläche des Fensters (2) fixiert und überdeckt nur einen Teil der Fensterfläche und des Ausgangsquerschnittes des Entladungskanals (13). Die Gasfüllung der Lampe und die entsprechende Auswahl der Zusatzfilter sind analog zur vorhergehenden Variante. Der vom Zusatzfilter (3) nicht überdeckte freie Abschnitt (5) ist gegenüber einem Teil des Ausgangs des Entladungskanals (13) angeordnet. Die vorliegende Variante der UV-Lampe arbeitet im Bereich der Glimmentladung. Bei einer Spannung, ausreichend für einen Durchschlag, entsteht im Lampenvolumen an den Elektroden (9 und 10) ein strahlendes Plasma, das einen gerichteten Photonenfluß aus dem Entladungskanal (13) gewährleistet. Ein Teil der Strahlung passiert das Zusatzfilter (3) und das Fenster (2), während der andere Teil durch den vom Filter (3) nicht bedeckten freien Abschnitt (5) des Fensters (2) direkt austritt. Das gewährleistet, wie in der oben genannten Variante, am Ausgang der Lampe zwei Photonenströme mit verschiedenen Strahlungscharakteristiken.

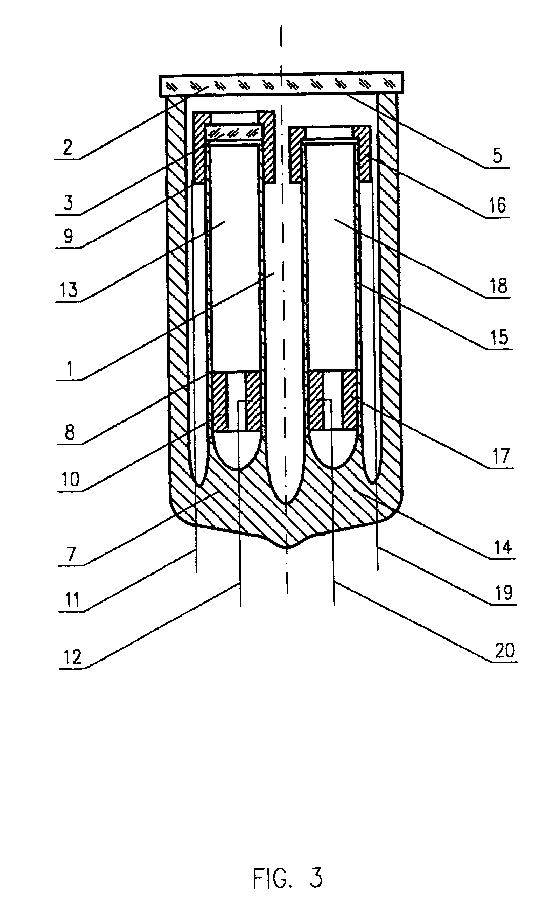

In Fig. 3 ist eine UV-Lampenvariante für den Photoionisationsnachweis mit zwei unterschiedlichen Entladungskanälen dargestellt, von denen sich einer gegenüber dem Zusatzfilter und der andere gegenüber der Oberfläche des vom Filter freien Abschnitts (5) des Fensters befindet. Die Lampe enthält einen aus Glas bestehenden Entladungskolben (1), der durch das aus Magnesiumfluorid bestehende Fenster (2) hermetisch abgeschlossen ist.

Der Entladungskolben enthält ein Gemisch von Krypton und Helium, das unter einem Druck von 400 Pa steht. Im Innern der Lampe ist ein Glasfuß (7), auf dem sich der Glaszylinder (8) befindet, der ein Elektodensystem trägt, bestehend aus einer Anode (9) und einer Katode (10), die den Entladungskanal (13) formieren. Gegenüber dem Entladungskanal (13) ist ein aus Kalziumfluorid bestehendes Zusatzfilter (3) angeordnet. Das Zusatzfilter (3) ist innerhalb der Anode (9) angeordnet und überdeckt teilweise das Magnesiumfluorid-Fenster (2) der UV-Lampe. Auf dem Glasfuß (14), der sich neben dem Glasfuß (7) im Innern des Kolbens (1) befindet, ist ein zusätzliches, im Glaszylinder (15) befindliches Elektrodensystem angeordnet, das die Zusatzelektroden (16 und 17) umfasst und den zusätzlichen Entladungskanal (18) bildet. Dieses Elektodensystem ist unmittelbar gegenüber dem vom Zusatzfilter (3) freien Abschnitt (5) des Fensters (2) angeordnet. Beide Elektrodenpaare sind mit hermetisch eingelöteten Stromleitern (11, 12 und 19, 20) verbunden, die an die in Fig. 3 nicht gezeigte Stromversorgung angeschlossen werden.

Die UV-Lampenvariante entsprechend Fig. 3 arbeitet folgendermaßen: Beim Anlegen einer Spannung, die die Durchlassspannung übersteigt, zwischen der Anode (9) und der Katode (10) und zwischen der zusätzlichen Anode (16) und der zusätzlichen Katode (17) entzündet sich eine Glimmentladung. In einer mit einem Gemisch von Krypton und Helium gefüllten Lampe erfolgt eine Anregung der Kryptonatome, und es entsteht eine Strahlung. Die Entladungskanäle (13 und 18) strahlen unter anderem Photonen mit Energien von 10,64 eV (λ=116,5 nm) und 10,02 eV (λ=123,6 nm) ab, die zur Photoionisation genutzt werden. Auf dem Wege der Ausbreitung der Strahlung aus dem Entladungskanal (13) befindet sich ein aus Kalziumfluorid bestehendes Zusatzfilter (3), das eine Durchlässigkeitsgrenze von λ=122 nm besitzt. Dieses Zusatzfilter (3) lässt keine Photonen mit einer Energie von 10,64 eV durch, jedoch solche mit 10,02 eV, die dann folglich durch das Fenster (2) abgestrahlt werden. Gegenüber dem Entladungskanal (18) gibt es keine zusätzlichen Filter. Die Strahlung wird direkt durch den freien Abschnitt (5) des Fensters (2) herausgeführt und enthält Photonen beider Energien.

Folglich befinden sich an Ausgang der in den Fig. 1-3 dargestellten Lampen zwei Photonenstrahlen, die sich in ihrer spektralen Zusammensetzung im FUV-Bereich unterscheiden. Der Lichtstrom, der den Entladungskanal verlässt und die kurzwellige (10,64 eV) und die langwellige (10,02 eV) Strahlung enthält, wird im Photoioniationsdetektor zur Ionisation von Komponenten sowohl mit hohem als auch mit niedrigem Ionisationspotential verwendet, d.h., es werden alle Stoffe mit einer Ionisationsenergie von weniger als 10,64 eV ionisiert.

Der Lichtstrom, der im Entladungskanal (13) entsteht, enthält nur Photonen mit einer Energie von 10,02 eV und wird für die Ionisation von Komponenten mit nicht großer Ionisationsenergie (bis zu 10,02 eV) verwendet. Das gestattet, sie selektiv vor dem Hintergrund schwerionisierbarer Stoffe zu bestimmen.

Die erfindungsgemäßen UV-Lampen erweitern das Anwendungsgebiet erheblich. Jede von ihnen kann faktisch zwei gleichzeitig arbeitende UV-Lampen ersetzen, und zwar eine Lampe mit Kryptonfüllung und einem Fenster aus Magnesiumfluorid und eine Lampe mit Kryptonfüllung und einem Fenster aus Magnesiumfluorid mit einem im Innern des Kolbens befindlichen Zusatzfilter aus Kalziumfluorid bzw. eine Lampe mit Xenonfüllung und einem Fenster aus Magnesiumfluorid und eine Lampe mit Xenonfüllung mit einem Fenster aus Magnesiumfluorid mit einem im Innern des Kolbens befindlichen Zusatzfilter aus Bariumfluorid.

Bekannt ist, dass bisher eine Lampe mit einem Fenster aus Kalzium- und Bariumfluorid nur mit Hilfe von Epoxidharzkomponenten und anderen Klebern hermetisiert werden konnte. Ihre Anwendung ist bis zu einer Temperatur von 100°C begrenzt und kommt daher als Alternative zur erfindungsgemäßen Lampe nicht in Betracht. In der erfindungsgemäßen Lampe wird die Hermetisierung der Verbindung des Fensters aus Magnesiumfluorid mit dem Kolben durch die Anwendung von Materialien gewährleistet, die eine Arbeitstemperatur bis zu 400°C aushalten. Folglich ist die Anwendung der erfindungsgemäßen Lampe, z.B. in der Gaschromatographie, möglich und zweckmäßig.

Ein weiterer Vorteil der Lampe besteht darin, dass die Veränderung des Spektrums, das die Strahlung die ganze Zeit über bewirkt, gleichzeitig in allen Entladungskanälen erfolgt, da sie durch die Veränderung ein- und derselben Gaszusammensetzung bestimmt wird, mit der die Lampe gefüllt ist.

Bei Anwendung von zwei verschiedenen Krypton- oder Xenonlampen vollzieht sich natürlich der Alterungsprozeß der Lampen mit unterschiedlicher Geschwindigkeit. Das ist ein Nachteil bei gleichzeitiger Verwendung von zwei Lampen im Analysenprozeß.

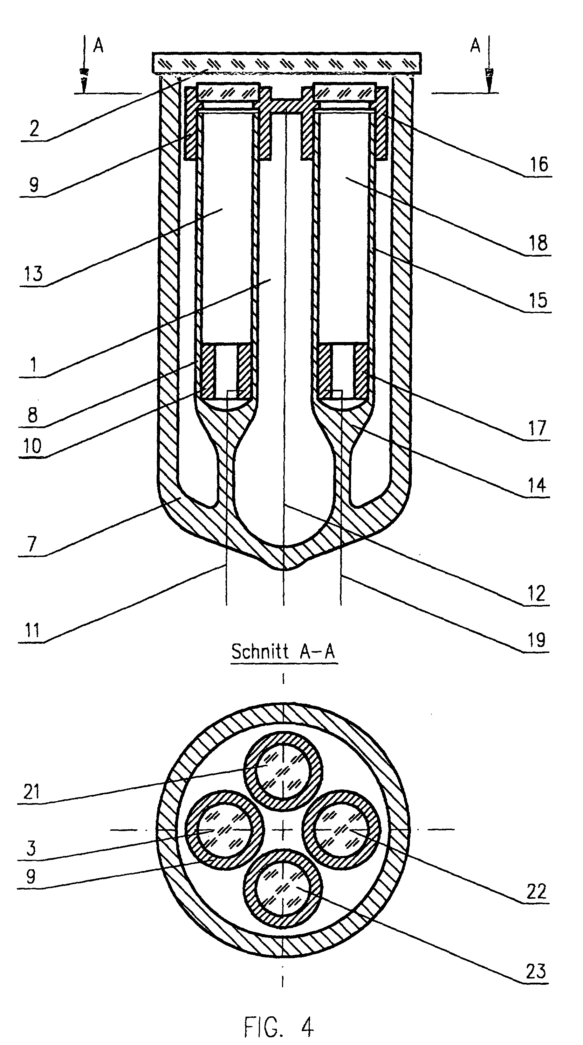

In Fig. 4 ist eine UV-Lampenvariante mit vier Entladungskanälen dargestellt, die vor vier Zusatzfiltern angeordnet sind. Der Kolben (1) ist mit einem Gemisch von Wasserstoff und Helium bei einem Druck von bis zu 600 Pa gefüllt und hat ein Fenster aus Magnesiumfluorid. Im Lampeninnern befinden sich vier Kathoden, die die Bezeichnung (10 und 17) tragen, ebenso wie die gemeinsame Anode (9), die vier Entladungskanäle bildet, von denen zwei (13 und 18), angegeben sind. Die UV-Lampe besitzt Stromzuführungen (11, 12 und 19). Gegenüber den Entladungskanälen befinden sich die Zusatzfilter (3, 21, 22 und 23), die aus Kalziumfluorid, Bariumfluorid, Saphir und Suprasil® bestehen, und zwar mit entsprechenden Grenzwerten für die Durchlässigkeit von λ=122, λ=135, λ=147 und λ=155 nm. Jedes dieser Zusatzfilter schneidet von dem vielfältigen Linienspektrum des Wasserstoffs jeweils den linken kurzwelligen Teil ab und lässt nur den rechten, d.h. den langwelligen durch. Dies gestattet, am Ausgang der Lampe vier Lichtstrahlen der UV-Strahlung mit verschiedener Zusammensetzung des Spektrums zu entnehmen.

Die Verwendung einer derartigen Lampe gestattet, neue Geräte zur Gasanalyse zu entwickeln. Ihre Anwendung in der Chromatographie und in der Feldmesstechnik vereinfacht prinzipiell die Aufgaben der Detektion.

## Patentansprüche

1. Ultraviolette Lampe für den Photoionisationsnachweis, bestehend aus einem Kolben (1), der mindestens mit einem Edelgas und/oder Wasserstoff und/oder Deuterium gefüllt und mit einem Fenster (2) als Basisfilter mit einer Kurzwelligen Durchlaßgrenz von λ=103 nm hermetisch abgeschlossen ist, wobei an der inneren Fensteroberfläche zumindest ein Zusatzfilter (3) angeordnet ist, das eine von dem Fenster (2) unterschiedliche Durchlasscharakteristik aufweist, **dadurch gekennzeichnet, dass** das Zusatzfilter (3) die Fensteroberfläche teilweise überdeckt.

2. Ultraviolette Lampe nach Anspruch 1, **dadurch gekennzeichnet, dass** gegenüber der vom ersten Zusatzfilter (3) freien Fensteroberfläche mindestens ein weiteres Zusatzfilter (21, 22, 23) angeordnet ist, dass eine von den Durchlasscharakteristika des ersten Zusatzfilters (3) und des Fensters (2) unterschiedliche Charakteristik aufweist.

3. Ultraviolette Lampe nach Anspruch 2, **gekennzeichnet durch** mindestens einen zusätzlichen Entladungskanal (18), der gegenüber dem mindestens einen weiteren Zusatzfilter (21, 22, 23) gelegen ist, das eine von den Durchlasscharakteristika des ersten Zusatzfilters (3) und des Fensters (2) unterschiedliche Charakteristik aufweist.

4. Ultraviolette Lampe nach Anspruch 3, **dadurch gekennzeichnet, dass** zur Bildung der zusätzlichen Entladungskanäle (18) zusätzliche Katoden (17) angeordnet sind.

5. Ultraviolette Lampe nach Anspruch 4, **dadurch gekennzeichnet, dass** zur Bildung der zusätzlichen Entladungskanäle (18) entsprechend der Anzahl der zusätzlichen Katoden (17) zusätzliche Anoden (16) vorgesehen sind.

6. Ultraviolette Lampe nach Anspruch 4, **dadurch gekennzeichnet, dass** eine gemeinsame Anode (9) für alle Entladungskanäle (13, 18) vorgesehen ist.

7. Ultraviolette Lampe nach Anspruch 3, **dadurch gekennzeichnet, dass** die Zusatzfilter (3, 21, 22, 23) aus Kalziumfluorid, Bariumfluorid, Saphir und Quarz bestehen.

## Claims

1. An ultraviolet lamp for detecting photoionization consisting of a bulb that is filled with at least one inert gas and/or hydrogen and/or deuterium and hermetically sealed by a window (2) as a base filter with a short-wave transmission threshold λ=103 nm, while at least one supplementary filter(3) with transmission characteristics different from said window (2) is provided on the inner window surface, **characterized in that** said supplementary filter (3) partially covers said window surface.

2. The ultraviolet lamp according to claim 1, **characterized in that** at least one other supplementary filter (21, 22, 23) with transmission characteristics different from the first supplementary filter (3) and the window (2) is provided opposite the window surface not covered by the first supplementary filter (3).

3. The ultraviolet lamp according to claim 2, **characterized in that** at least one additional discharge canal (18) with transmission characteristics different from the first supplementary filter (3) and the window (2) is located opposite said at least one other supplementary filter (21, 22, 23).

4. The ultraviolet lamp according to claim 3, **characterized in that** additional cathodes (17) are provided to form said additional discharge canals (18).

5. The ultraviolet lamp according to claim 4, **characterized in that** a number of additional anodes (16) matching the number of additional cathodes (17) are provided to form said additional discharge canals (18).

6. The ultraviolet lamp according to claim 4, **characterized in that** one joint anode (9) is provided for all discharge canals (13, 18).

7. The ultraviolet lamp according to claim 3, **characterized in that** said supplementary filters (3, 21, 22, 23) consist of calcium fluoride, sapphire, and quartz.

## Revendications

1. Lampe ultraviolette pour la mise en évidence d'une ionisation photoélectrique, constituée par une ampoule (1) qui est remplie d'au moins un gaz rare et/ou d'hydrogène et/ou de deutérium et qui est refermée hermétiquement par une fenêtre (2) à titre de filtre de base présentant une limite de passage vis-à-vis des ondes courtes de λ = 103 nm, au moins un filtre supplémentaire (3) étant agencé sur la surface de fenêtre intérieure, filtre qui présente une caractéristique de passage qui diffère de celle de la fenêtre (2), **caractérisée en ce que** le filtre supplémentaire (3) recouvre partiellement la surface de fenêtre.

2. Lampe ultraviolette selon la revendication 1, **caractérisée en ce qu'**au moins un autre filtre supplémentaire (21, 22, 23) est agencé à l'opposé de la surface de fenêtre libre par rapport au premier filtre supplémentaire (3) et présente une caractéristique qui diffère des caractéristiques de passage du premier filtre supplémentaire (3) et de la fenêtre (2).

3. Lampe ultraviolette selon la revendication 2, **caractérisée par** au moins un canal de décharge supplémentaire (18) qui est situé à l'opposé dudit au moins un autre filtre supplémentaire (21, 22, 23) présentant une caractéristique qui diffère des caractéristiques de passage du premier filtre supplémentaire (3) et de la fenêtre (2).

4. Lampe ultraviolette selon la revendication 3, **caractérisée en ce que** pour former les canaux de décharge supplémentaires (18), il est prévu des cathodes supplémentaires (17).

5. Lampe ultraviolette selon la revendication 4, **caractérisée en ce que** pour former les canaux de décharge supplémentaires (18), il est prévu un nombre d'anodes supplémentaires (16) en correspondance du nombre des cathodes supplémentaires (17).

6. Lampe ultraviolette selon la revendication 4, **caractérisée en ce qu'**il est prévu une anode commune (9) pour tous les canaux de décharge (13, 18).

7. Lampe ultraviolette selon la revendication 3, **caractérisée en ce que** les filtres supplémentaires (3, 21, 22, 23) sont constitués en fluorure de calcium, en fluorure de baryum, en saphir et en quartz.
